# EUROPÄISCHE PATENTSCHRIFT

(11) **EP 0 751 868 B1**
(45) Veröffentlichungstag und Bekanntmachung des Hinweises auf die Patenterteilung: **08.07.1998**
(21) Anmeldenummer: 96900196.5
(22) Anmeldetag: 19.01.1996
(51) Int. Cl.: B32B 3/02, B32B 33/00

(54) **LAMINATBAUTEIL MIT ANDERER ELASTIZITÄT IN DEN RANDZONEN**
LAMINATE COMPONENT WITH DIFFERENT ELASTICITY IN THE EDGE REGIONS
COMPOSANT STRATIFIE A ELASTICITE DIFFERENTE DANS LES REGIONS MARGINALES

(30) Priorität: 19.01.1995 AT 80/95
(43) Veröffentlichungstag der Anmeldung: 08.01.1997
(73) Patentinhaber: ISOVOLTA Österreichische Isolierstoffwerke Aktiengesellschaft, 2355 Wiener Neudorf (AT)
(72) Erfinder: WIMMER, Wolfgang, A-1190 Wien (AT)
(74) Vertreter: Dungler, Karin
(86) Internationale Anmeldenummer: AT9600007
(87) Internationale Veröffentlichungsnummer: WO9622188

(56) Entgegenhaltungen:
- US-A- 3 641 230
- US-A- 3 736 609

## Beschreibung

Die Erfindung betrifft ein Laminatbauteil, welches im wesentlichen aus einer mit hochelastischen Fasern verstärkten Kunstharzmatrix besteht.

### Stand der Technik

Derartige Laminate werden durch Verpressen mehrerer Prepregs, welche durch Tränken von Verstärkungsfasern mit den entsprechenden Kunstharzen hergestellt werden, erzeugt. Aus diesen Laminaten werden unter anderem Bauteile für die Innenausgestaltung von Verkehrsmitteln sowie für den Maschinenbau hergestellt. An diese Laminate werden nun eine Reihe von Anforderungen wie hohe dynamische, mechanische Eigenschaften sowie hohe Temperatur- und Chemikalienbeständigkeit gestellt. Ferner werden an die Laminate insbesondere bei deren Einsatz als Bauteile bei der Innenausstattung von Verkehrsmitteln hohe Anforderungen hinsichtlich des Brandverhaltens gestellt.

Obzwar diese eingangs erwähnten Laminate hohe dynamische, mechanische Eigenschaften aufweisen, hat es sich gezeigt, daß bei deren Weiterverarbeitung insbesondere an den Randzonen Spannungskräfte auftreten können, welche die weitere Verwendung, insbesondere bei deren Befestigung als Bauteil, erheblich erschweren.

Aufgabe der Erfindung ist es daher, ein Laminatbauteil anzugeben, welches über die Bauteilfläche eine unterschiedliche Elastizität aufweist, sodaß an den Randzonen eine genügend hohe Elastizität für eine problemlose Befestigung und in der Bauteilmitte Elastizitätswerte aufweist, die dennoch eine ausreichende mechanische Festigkeit des Laminatbauteiles gewährleisten.

### Darstellung der Erfindung

Diese Aufgabe wird anhand des erfindungsgemäßen Laminatbauteils gelöst, welches im wesentlichen aus einer mit hochelastischen Fasern verstärkten Kunstharzmatrix besteht und welches a) einen Laminatbereich mit einem Biege-E-Modul von 10000 - 40000 MPa, herstellbar aus mehreren übereinander angeordneten und miteinander heißverpreßten und dabei ausgehärteten Kunstharz-Faserprepregs, b) an zumindestens zwei einander gegenüberliegenden Rändern des Laminatbereiches angeordnete Anschlußleisten aus weichelastischem Material, die mit den entsprechenden Rändern des Laminatbereiches flächig verbunden sind und c) gegebenenfalls an einer Laminatseite eine dekorative Deckschicht enthält.

Das erfindungsgemäße Laminatbauteil weist ferner den Vorteil auf, daß der Rand des Laminatbereichs zu den Anschlußleisten abgestuft ausgeführt ist.

Ein weiterer Vorteil des erfindungsgemäßen biegbaren Laminatbauteils besteht darin, daß das weichelastische Material der Randbereiche aus flammgeschütztem Kautschuk besteht und daß es bei der Herstellung des Laminatbauteils im unvernetzten Zustand einsetzbar ist. Die Vernetzung erfolgt bei der Heißverpressung der Kunstharz-Faserprepregs, wobei das weichelastische Material gleichzeitig mit diesen verbunden wird.

Das erfindungsgemäße Laminatbauteil weist ferner eine Kunstharzmatrix aus einem duromeren Kunstharz - vorzugsweise ein Phenolharz - auf und enthält als hochelastische Fasern im wesentlichen Glasfasern.

Ein weiterer Vorteil der Erfindung besteht darin, daß das Kunstharz der Matrix derart modifiziert ist, sodaß das Laminatbauteil ein verbessertes Brandverhalten aufweist.

### Figurenbeschreibung im Zusammenhang mit einem Weg zur Ausführung der Erfindung

Die Erfindung wird anhand der Figurenbeschreibung sowie eines Ausführungsbeispiels näher erläutert.

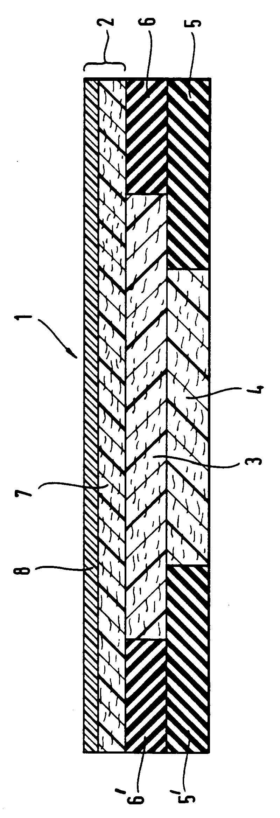

Aus der Figur ist das erfindungsgemäße Laminatbauteil 1 ersichtlich. Dieses weist die Laminatbereiche 3 und 4 sowie die an den gegenüberliegenden Rändern dieser Laminatbereiche anliegenden Anschlußleisten 5 bzw. 5' sowie 6 und 6' auf. An zumindestens einer Laminatseite ist die dekorative Deckschicht 2 bestehend aus einer dünnen Laminatschicht 7 und einer Polyvinylfluoridschicht 8 angeführt.

Das erfindungsgemäße Laminatbauteil gemäß Figurenbeschreibung kann beispielsweise durch die folgenden Verfahrensschritte hergestellt werden:

### Verfahrensschritt 1:

Die hochelastischen Fasern können beispielsweise in Form von Glasgeweben eingesetzt werden, welche in der Folge durch Tauchimprägnierung mit einer Phenolharzlösung imprägniert werden. Dabei soll ein Harzgehalt von 25 - 60%, vorzugsweise von 35 bis 50%, erzielt werden. Anschließend werden die imprägnierten Glasgewebe hitzebehandelt, wodurch das eingesetzte Lösungsmittel abgedampft und das Kunstharz in den B-Zustand übergeführt wird. Durch diesen Verfahrensschritt werden Kunstharz-Faserprepregs bereitgestellt.

### Verfahrensschritt 2:

Die im Verfahrensschritt 1 hergestellten Kunstharz-Faserprepregs werden nun in mehreren Lagen derart zugeschnitten, daß der zentrale Laminatbereich 3, 4 gemäß Figur gebildet wird, welcher zu seinem Randbereich hin abgestuft ist.

### Verfahrensschritt 3:

Die im Verfahrensschritt 2 zugeschnittenen Lagen von Faserprepregs werden an zumindestens zwei Seiten mit unvulkanisierten, weichelastischen Materialien wie flammgeschütztem Kautschuk oder Polyurethan-Folien verschlichtet. Diese weichelastischen Materialien können flamm- und/oder rauchhemmende Zusatzstoffe enthalten. Um eine Anschlußleiste an den zentralen Laminatbereich 3 zu bilden, weisen die Schichten am weichelastischen Material 6, 6' eine Breite von beispielsweise 3 cm auf, während die Schichten 5, 5', um einen Anschluß an den Randbereich des Laminats 4 zu bilden, eine Breite von beispielsweise 5 cm aufweisen. An die Außenseite dieses Stapels wird ferner eine Deckschicht 2 verschlichtet, welche beispielsweise aus einer bedruckten Polyvinylfluorid-Folie 8 und einer dünnen Laminatschicht 7 besteht.

### Verfahrensschritt 4:

Der im Verfahrensschritt 3 gebildete Stapel wird in der Folge in einem an sich bekannten Preßvorgang bei einer Temperatur bis zu 140°C sowie einem Druck von 10 bar verpreßt. Dabei vernetzt das weichelastische Material der Anschlußleisten 5, 5' sowie 6, 6', während das im B-Zustand befindliche Harz des Laminatbereichs 3, 4 sowie das gegebenenfalls in der Deckschicht 2 eingesetzte Faserprepreg 7 in den C-Zustand übergeführt wird.

### Gewerbliche Verwertbarkeit

Das erfindungsgemäße Laminatbauteil kann für die Innenraumausgestaltung von Verkehrsmitteln verwendet werden. Dabei zeigt es ein verbessertes Brand- und/oder Rauchentwicklungsverhalten gegenüber bekannten Laminaten, welche(s) insbesondere durch den Einsatz des schwer entflammbaren, modifizierten Kunstharzes der Kunstharzmatrix und des flammgeschützten weichelastischen Materials in den Randzonen hervorgerufen werden (wird).

## Patentansprüche

1. Laminatbauteil bestehend im wesentlichen aus einer mit hochelastischen Fasern verstärkten Kunstharzmatrix, welches
a) einen Laminatbereich mit einem Biege-E-Modul von 10000 - 40000 MPa, herstellbar aus mehreren übereinander angeordneten und miteinander heißverpreßten und dabei ausgehärtetem Kunstharz-Faserprepregs,
b) an zumindestens zwei einander gegenüberliegenden Rändern des Laminatbereiches angeordnete Anschlußleisten aus weichelastischem Material, die mit den entsprechenden Rändern des Laminatbereiches flächig verbunden sind und
c) gegebenenfalls an einer Laminatseite eine dekorative Deckschicht enthält.

2. Laminatbauteil nach Anspruch 1, dadurch gekennzeichnet, daß der Rand des Laminatbereichs zu den Anschlußleisten abgestuft ausgeführt ist.

3. Laminatbauteil nach Anspruch 1 oder 2, dadurch gekennzeichnet, daß das weichelastische Material aus flammgeschütztem Kautschuk besteht.

4. Laminatbauteil nach einem der Ansprüche 1 bis 3, dadurch gekennzeichnet, daß bei der Herstellung des Laminatbauteils das weichelastische Material der Randbereiche im unvernetzten Zustand einsetzbar ist und bei der Heißverpressung der Kunstharz-Faserprepregs mit diesen verbunden wird, wobei es gleichzeitig vernetzt wird.

5. Laminatbauteil nach einem der Ansprüche 1 bis 4, dadurch gekennzeichnet, daß die Kunstharzmatrix aus einem duromeren Kunstharz, vorzugsweise Phenolharz, gebildet wird.

6. Laminatbauteil nach einem der Ansprüche 1 bis 5, dadurch gekennzeichnet, daß es in der Kunstharzmatrix ein modifiziertes Kunstharz aufweist.

7. Laminatbauteil nach einem der Ansprüche 1 bis 6, dadurch gekennzeichnet, daß die hochelastischen Fasern im wesentlichen aus Glasfasern bestehen.

## Claims

1. A laminate component substantially comprising a highly elastic fibre-reinforced synthetic resin matrix which contains
a) a laminate region with a bending modulus E of 10,000 to 40,000 MPa, which can be produced from a plurality of synthetic resin fibre prepregs disposed one on top of the other and hot-pressed together and cured,
b) connecting strips of soft elastic material which are arranged on at least two opposite edges of the laminate region and which are bonded at the surface to the corresponding edges of the laminate region, and
c) a decorative covering layer optionally on one side of the laminate.

2. A laminate component according to Claim 1, characterised in that the edge of the laminate region is stepped relative to the connecting strips.

3. A laminate component according to claim 1 or claim 2, characterised in that the soft elastic material comprises flame-proofed rubber.

4. A laminate component according to any one of Claims 1 to 3, characterised in that during the production of the laminate component the soft elastic material of the edge regions can be used in a noncross-linked state and during the hot-pressing of the synthetic resin fibre prepregs is bonded thereto, whereupon it is simultaneously cross-linked.

5. A laminate component according to any one of Claims 1 to 4, characterized in that the synthetic resin matrix is formed from a thermosetting synthetic resin, preferably a phenol resin.

6. A laminate component according to any one of Claims 1 to 5, characterised in that it has a modified synthetic resin in the synthetic resin matrix.

7. A laminate component according to any one of Claims 1 to 6, characterised in that the highly elastic fibres consist substantially of glass fibres.

## Revendications

1. Composant stratifié se composant pour l'essentiel d'une matrice en résine synthétique renforcée par des fibres à élasticité élevée, et qui comporte :
a) une zone stratifiée présentant un module d'élasticité E en flexion de 10 000 à 40 000 MPa, susceptible d'être fabriquée à partir de plusieurs préimprégnés en fibres et résine synthétique, disposés les uns au-dessus des autres et pressés à chaud ensemble, et ainsi durcis;
b) des bandes de jonction en matériau mou et élastique disposées sur au moins deux bords opposés de la zone stratifiée, qui sont reliées à plat aux bords correspondants de la zone stratifiée; et
c) le cas échéant, sur une face du stratifié, une couche décorative de recouvrement.

2. Composant stratifié selon la revendication 1, caractérisé en ce que le bord de la zone stratifiée est réalisé en gradins par rapport aux bandes de jonction.

3. Composant stratifié selon la revendication 1 ou 2, caractérisé en ce que le matériau mou et élastique se compose de caoutchouc ignifugé.

4. Composant stratifié selon l'une des revendications 1 à 3, caractérisé en ce qu'au cours de la fabrication du composant stratifié, le matériau mou et élastique des zones de bord est susceptible d'être introduit à l'état non réticulé et, au cours du pressage à chaud du préimprégné de fibres et résine synthétique, est relié à celui-ci, tout en étant simultanément réticulé.

5. Composant stratifié selon l'une des revendications 1 à 4, caractérisé en ce que la matrice de résine synthétique est constituée d'une résine synthétique thermodurcissable, de préférence une résine phénolique.

6. Composant stratifié selon l'une des revendications 1 à 5, caractérisé en ce qu'il comporte dans la matrice de résine synthétique, une résine synthétique modifiée.

7. Composant stratifié selon l'une des revendications 1 à 6, caractérisé en ce que les fibres à grande élasticité se composent pour l'essentiel de fibres de verre.
